(19) Europäisches Patentamt
European Patent Office
Office européen des brevets

(11)  EP 2 556 029 B1

(12)  EUROPÄISCHE PATENTSCHRIFT

(45) Veröffentlichungstag und Bekanntmachung des Hinweises auf die Patenterteilung:
**18.02.2015  Patentblatt 2015/08**

(21) Anmeldenummer: **11707184.5**

(22) Anmeldetag: **10.03.2011**

(51) Int Cl.:
*C01G 49/02* (2006.01)       *C01G 49/00* (2006.01)
*C09C 1/24* (2006.01)

(86) Internationale Anmeldenummer:
**PCT/EP2011/053588**

(87) Internationale Veröffentlichungsnummer:
**WO 2011/124437 (13.10.2011 Gazette 2011/41)**

(54) **JANUSARTIGE EISEN-SILICIUM-OXIDPARTIKEL**

JANUS-LIKE IRON-SILICON OXIDE PARTICLE

PARTICULES D'OXYDE DE FER ET DE SILICIUM DE TYPE JANUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2010  DE 102010003647**

(43) Veröffentlichungstag der Anmeldung:
**13.02.2013  Patentblatt 2013/07**

(73) Patentinhaber: **Evonik Degussa GmbH**
**45128 Essen (DE)**

(72) Erfinder:
• **HAGEMANN, Michael**
  **6397 Kahl (DE)**
• **SCHULZE ISFORT, Christian**
  **63694 Limeshain (DE)**
• **KLOTZ, Oswin**
  **63825 Westerngrund (DE)**
• **SCHUHARDT, Nina**
  **63762 Großostheim (DE)**
• **GOLCHERT, Rainer**
  **64807 Dieburg (DE)**

(56) Entgegenhaltungen:
**EP-A1- 1 284 485     EP-A1- 2 000 439**

• **N. ZHAO, M. GAO: "Magnetic Janus Particles prepared by a flame synthetic approach: Synthesis, characterizations and properties", ADV. MATER, Bd. 21, 9. Januar 2009 (2009-01-09), Seiten 184-187, XP002631766, Weinheim DOI: 10.1002/adma.200800570**

**Beschreibung**

Die Erfindung betrifft sphärische und/oder sphäroide Eisen-Silicium-Oxipartikel, die zwei Abschnitte aufweisen, wobei ein Abschnitt im Wesentlichen aus amorphem Siliciumdioxid und der andere Abschnitt im Wesentlichen aus Eisenoxid besteht. Die Erfindung betrifft ferner ein Verfahren zu deren Herstellung und deren Verwendung.

In Adv. Mater. 21 (2009), 184-187 wird ein vereinfachtes Verfahren zur Herstellung von sogenannten Januspartikeln aus Siliciumdioxid und Maghemit offenbart. Bei diesen Januspartikeln handelt es sich um sphärische Partikel mit einer mittleren Partikelgröße von 71 $\pm$ 33 nm, bei denen eine Hemisphäre aus amorphem Siliciumdioxid, die andere Hemisphäre überwiegend aus Maghemit besteht. Die Januspartikel werden erhalten, indem eine Lösung aus Methanol und nahezu äquimolaren Mengen von Eisen(III)actylacetonat und Tetraethoxysilan, in einer Flamme verbrannt wird. Wesentlich dabei ist, dass im Gegensatz zu den üblichen Spraypyrolyseverfahren nicht mittels eines Gases verdüst wird und dass die Beladung der Flamme deutlich verringert wird. Die Veröffentlichung offenbart nicht, dass die magnetischen Eigenschaften dieser Janus-Partikel variiert werden können. Nachteilig bei diesem Verfahren ist die Tatsache, dass die erzielten Mengen sich auf Labormaßstab beziehen und eine Übertragung auf ein Verfahren im technischen Maßstab aus der Offenbarung nicht abzuleiten ist.

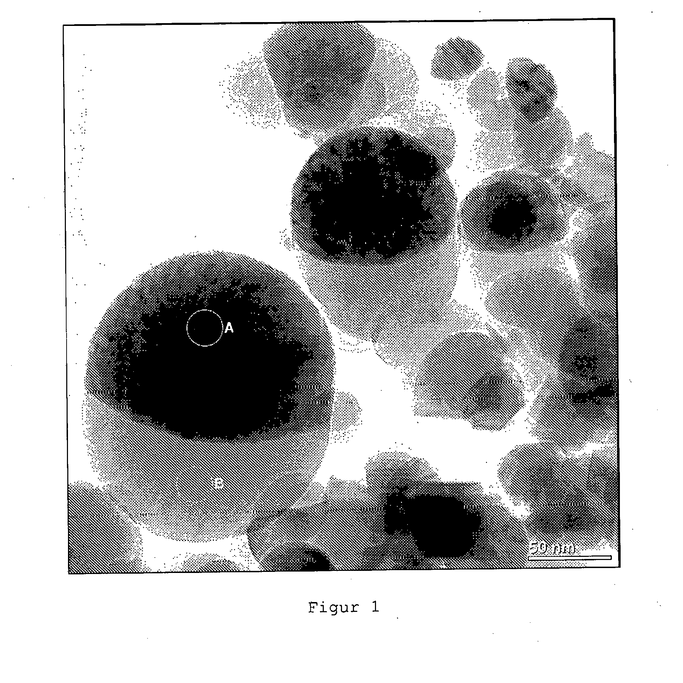

Dagegen sind im Stand der Technik Verfahren zur Herstellung von Silicium-Eisen-Mischoxiden bekannt, die jedoch nicht in Form von Janus-Partikeln vorliegen. So sind aus EP-A-1284485 Silicium-Eisenmischoxid-Partikel bekannt, bei denen entweder Domänen einer Mischoxidkomponente in oder auf einer Matrix der mengenmäßig größeren Mischoxidkomponente vorliegen. WO 2008/148588 offenbart ein Silicium-Eisen-Mischoxidpulver in Form aggregierter, räumlich voneinander getrennter Bereiche von Siliciumdioxid und Eisenoxid mit einem mittleren Partikeldurchmesser des Eisenoxides von 2 bis 100 nm. Bei den Aggregaten handelt es sich um dreidimensionale Strukturen, wie sie Figur 1 in WO 2008/148588 zeigt. Figur 1 zeigt weiterhin schematisch die Verteilung der Mischoxidkomponenten in einem Primärpartikel. Weiterhin wird offenbart, dass das Siliciumdioxid als Mischoxidkomponente eine Hülle um das Eisenoxid ausbilden kann und die Eisenoxidphasen Maghemit und Magnetit überwiegen können. Das Silicium-Eisenmischoxidpulver wird durch Flammenspraypyrolyse einer dampfförmigen Chlorsiliciumverbindung und einer wässerigen Eisenchloridlösung hergestellt.

Gao et al. offenbaren in Adv. Mater. 21 (2009), 184 janusförmige Kompositpartikel aus Siliciumdioxid und Maghemit. Sie werden erhalten, indem man eine methanolische Lösung von Eisen triacetylacetonate und Tetraethylorthosilicat zündet.

Die technische Aufgabe der vorliegenden Erfindung war es daher, Partikel bereitzustellen, die die besonderen chemischen und physikalischen Eigenschaften der Januspartikel aufweisen und deren magnetische Eigenschaften an die jeweilige Anwendung angepasst werden können. Eine weitere Aufgabe der Erfindung war es, ein Verfahren zur Herstellung dieser Partikel bereitzustellen, das es erlaubt, Mengen in technischen Dimensionen zu erzielen.

Die technische Aufgabe wird gelöst durch Eisen-Silicium-Oxidpartikel, die

a) Oxidpartikel in sphärischer und/oder sphäroider Form umfassen, die zwei Abschnitte aufweisen, wobei ein Abschnitt im Wesentlichen aus amorphem Siliciumdioxid und der andere Abschnitt im Wesentlichen aus Eisenoxid besteht,
b) sie im Röntgendiffraktogramm, welches mittels eines Diffraktometers mit CuK alpha-Strahlung, einer Spannung U von 40 kV und einer Stromstärke I von 40 mA erzeugt wird,

b1) einen Beugungsreflex 1, dessen maximale Signalhöhe 1 bei einem Beugungswinkel 2$\Theta$ = 32 bis 34° und
b2) einen Beugungsreflex 2, dessen maximale Signalhöhe 2 bei einem Beugungswinkel 2$\Theta$ = 34,5 bis 36,5° ist, zeigen, wobei
b3) q $\geq$ 1, wobei q definiert als maximale Signalhöhe 2/ maximale Signalhöhe 1.

Die erfindungsgemäßen Eisen-Silicium-Oxidpartikel, liegen bevorzugt überwiegend, das heißt zu mehr als 50%, in der Regel zu mehr als 80 %, jeweils bezogen auf die Anzahl der Partikel, in sphärischer und/oder sphäroider Form vor, wobei sie zwei Abschnitte aufweisen, einer im Wesentlichen bestehend aus amorphem Siliciumdioxid, der andere im Wesentlichen bestehend aus Eisenoxid. Der Anteil kann durch die dem Fachmann bekannte Methoden, wie beispielsweise Auszählung von TEM Aufnahmen, bestimmt werden. Die Struktur der Eisen-Silicium-Oxidpartikel kann durch elektronenmikroskopische Aufnahmen (TEM) ermittelt werden. Figur 1 zeigt erfindungsgemäße Partikel. Die Partikel sind fast mittig von einer konkaven Phasengrenze durchzogen, die eine Eisenoxid-Hälfte, gekennzeichnet mit A, von einer Siliciumdioxid-Hälfte gekennzeichnet mit B, trennt. Die erfindungsgemäßen Partikel liegen bevorzugt als isolierte Einzelpartikel vor.

Die erfindungsgemäßen Eisen-Silicium-Oxidpartikel zeigen in den Röntgendiffraktogrammen Reflexe, die den Eisenoxidphasen gamma-$Fe_2O_3$, $Fe_3O_4$, alpha-$Fe_2O_3$ und beta-$Fe_2O_3$ zuzuordnen sind. Der Siliciumdioxidanteil der erfindungsgemäßen Partikel ist röntgenamorph. Die Reflexe der Eisenoxidphasen gamma-$Fe_2O_3$ und $Fe_3O_4$, überlagern

sich in einem Bereich 2Θ von 34,5 bis 36,5°, und alpha-$Fe_2O_3$ und beta-$Fe_2O_3$ überlagern sich in einem Bereich 2Θ von 32 bis 34°, so dass eine Bestimmung der Anteile der einzelnen Phasen nicht möglich ist. Jedoch ist den Röntgendiffraktogrammen zu entnehmen, dass mindestens zwei Eisenoxidphasen in den erfindungsgemäßen Eisen-Silicium-Oxidpartikeln vorliegen. Es hat sich gezeigt, dass das Verhältnis der maximalen Signalhöhen der Reflexe bei den Beugungswinkeln im Bereich 2Θ = 34,5 bis 36,5° zu den Beugungswinkeln im Bereich 2Θ = 32 bis 34° Werte q ≥ 1 annimmt. Anhand dieser Werte lassen sich die magnetischen Eigenschaften der Eisen-Silicium-Oxidpartikel festlegen, unabhängig von der genauen Kenntnis der Phasenzusammensetzung.

So werden die Eisen-Silicium-Oxidpartikel bei hohen q-Werten bei einer Anregung im magnetischen oder elektromagnetischen Wechselfeld eine hohe Aufheizrate erfahren, während bei niedrigen q-Werten niedrige Aufheizraten resultieren. Die q-Werte q ≥ 1 sind gezielt einstellbar, so dass für jedes Anwendungsgebiet eine maßgeschneiderte Aufheizrate bereitgestellt werden kann. Bevorzugt werden Eisen-Silicium-Oxidpartikel die zu hohen Aufheizraten führen, also solche mit 1 ≤ q ≤ 10. Besonders bevorzugt können Eisen-Silicium-Oxidpartikel mit 3 ≤ q ≤ 7 sein.

Weiterhin können Eisen-Silicium-Oxidpartikel bevorzugt sein, bei denen der Anteil an Siliciumdioxid oder Eisenoxid, berechnet als $Fe_2O_3$, 10 bis 90 Gew.-% beträgt. Besonders bevorzugt können Eisen-Silicium-Oxidpartikel sein die einen Anteil von 60 bis 80 Gew.-% Eisenoxid und 20 bis 40 Gew.-% Siliciumdioxid aufweisen. In einer solchen Ausführungsform liegen die Partikel annähernd oder weitestgehend in Form vor, die Hemisphären von Eisenoxid und Siliciumdioxid zeigt. Die Bestimmung der Zusammensetzung kann durch dem Fachmann bekannte Verfahren, wie beispielsweise Röntgenfluoreszenzanalyse (RFA), bestimmt werden.

Die erfindungsgemäßen Partikel können durch Adsorption, Reaktionen an der Oberfläche oder Komplexierung mit anorganischen und organischen Reagenzien modifiziert werden. Zum Beispiel können die erfindungsgemäßen Partikel durch eine nachfolgende Behandlung mit Oberflächenmodifizierungsreagenzien eine teilweise oder vollständig hydrophobierte Oberfläche erhalten. Beispielhaft seien Octyltrimethoxysilan, Octyltriethoxysilan, Hexamethyldisilazan, 3-Methacryloxypropyltrimethoxysilan, 3-Methacryloxypropyltriethoxysilan, Dimethylpolysiloxan, Glycidyloxypropyltrimethoxysilan, Glycidyloxypropyltriethoxysilan, Nonafluorohexyltrimethoxysilan, Tridecafluorooctyltrimethoxysilan, Tridecafluorooctyltriethoxysilan und Aminopropyltriethoxysilan genannt.

Die Summe der Anteile aus Eisenoxid und Siliciumdioxid in den erfindungsgemäßen, nicht oberflächenmodifizierten Partikeln beträgt in der Regel wenigstens 98 Gew.-%, bevorzugt wenigstens 99 Gew.-%. Bei oberflächenmodifizierten Partikeln ist ein Kohlenstoffgehalt von 0,1 bis 15 Gew.-% zu berücksichtigen. Darüber hinaus können die erfindungsgemäßen Partikel bis zu 2 Gew.-% Chlorid enthalten. In der Regel beträgt der Anteil an Chlorid 0,01 bis 1 Gew.-%.

Weiterhin beträgt die BET-Oberfläche der erfindungsgemäßen Eisen-Silicium-Oxidpartikel bevorzugt 10 bis 200 $m^2/g$ und besonders bevorzugt 25 bis 100 $m^2/g$.

Zum Erzielen hoher Aufheizraten haben sich erfindungsgemäße Eisen-Silicium-Oxidpartikel bewährt, bei denen 3 ≤ q ≤ 7, der Anteil an Eisenoxid 60 bis 80 Gew.-% und der an Siliciumdioxid 20 bis 40 Gew.-% und bei denen die BET-Oberfläche 30 bis 100 $m^2/g$ ist.

Ein weiterer Gegenstand der Erfindung ist ein Verfahren zur Herstellung der Eisen-Silicium-Oxidpartikel, bei dem man

  a) einen Strom eines Gemisches umfassend jeweils eine oder mehrere

    a1) oxidierbare und/oder hydrolysierbare, dampfförmige Siliciumverbindungen und oxidierbare und/oder hydrolysierbare, dampfförmige Eisenverbindungen, entsprechend dem für die herzustellenden Eisen-Silicium-Oxidpartikel gewünschten Verhältnis, bezogen auf $Fe_2O_3$ und $SiO_2$,

    a2) wasserstoffhaltige Brenngase und

    a3) Sauerstoff enthaltende Gase in einer Flamme zur Reaktion bringt, wobei gilt, dass

    a4) die Gesamtmenge an Sauerstoff mindestens zur vollständigen Umsetzung des wasserstoffhaltigen Brenngases, der Siliciumverbindung und der Eisenverbindung ausreicht,

    a5) die Menge der Einsatzstoffe, bestehend aus Siliciumverbindung, Eisenverbindung, Brenngas und Sauerstoff so gewählt ist, dass eine adiabate Flammentemperatur $T_{ad}$ von 500 bis 3000°C resultiert, wobei

$$T_{ad} = [\text{Temperatur Einsatzstoffe} + \text{Summe der}$$
$$\text{Reaktionsenthalpien der Teilreaktionen}/$$
$$\text{Wärmekapazität der Stoffe nach der Umsetzung}],$$

wobei die spezifische Wärmekapazität der Stoffe bei 1000°C zugrunde gelegt wird,

b) aus dem Reaktionsgemisch den Feststoff von gasförmigen Stoffen abtrennt und

c) ihn gegebenenfalls mit einem anorganischen und/oder organischen Oberflächenmodifizierungsmittel behandelt.

Die Stoffe nach der Umsetzung umfassen die erfindungsgemäßen Partikel, Wasser, Kohlendioxid, Sauerstoff und Stickstoff. Für den Fall, dass chloridhaltige Einsatzstoffe verwendet werden, entsteht weiterhin Chlorwasserstoff. Die spezifischen Wärmekapazitäten können beispielsweise mit Hilfe des VDI-Wärmeatlas (Kapitel 7.1 bis 7.3 und 3.7, 8. Auflage) ermittelt werden.

Die Dämpfe der Eisen- und Siliciumverbindungen können dabei getrennt oder gemeinsam, jeweils auch mit Hilfe eines Traggases, in die Flamme eingebracht werden.

Es ist für das erfindungsgemäße Verfahren wesentlich, dass die Eisen- und Siliciumverbindungen in dampfförmigem Zustand der Flamme zugeführt werden. Es sind im Stand der Technik Verfahren beschrieben, bei denen wenigstens einer dieser Einsatzstoffe in Form eines Aerosoles, d.h. in feinen Tröpfchen, einer Flamme zugeführt wird. Diese Verfahren führen jedoch nicht zu den Eisen-Silicium-Oxidpartikeln der vorliegenden Erfindung. In EP-A-1284485 wird ein Aerosol, gebildet durch Verdüsen einer wässrigen Eisen(II)- oder Eisen (III) chlorid-Lösung, in die Flamme eingebracht. Es resultieren Partikel mit einer Matrix-Domänenstruktur, bei denen superparamagnetische Eisenoxid-Domänen in einer Matrix aus Siliciumdioxid vorliegen. In EP-A-2000439 werden Eisen-Silicium-Oxidpartikel offenbart, die in Form aggregierter Primärpartikel vorliegen, wobei die Primärpartikel räumlich voneinander getrennte Bereiche von Siliciumdioxid und Eisenoxid zeigen. Auch hier wird die Eisenverbindung in Form eines Aerosoles in eine Flamme eingebracht.

Es kann ferner von Vorteil sein, wenn die Austrittsgeschwindigkeit des Reaktionsgemisches, bestehend aus den Gasen und Dämpfen, die der Flamme zugeführt werden, 10 bis 80 m/s ist.

Im Anschluss an die Abtrennung des Feststoffes von gasförmigen Stoffen, kann man diesen, insbesondere dann wenn halogenidhaltige Einsatzstoffe verwendet werden, mit Wasserdampf, vorzugsweise bei 250°C bis 750°C und bei einer mittleren Verweilzeit von 1 s bis 5 min, behandeln. Dem Fachmann sind solche Verfahren aus dem Stand der Technik bekannt. Es hat sich nun gezeigt, dass auch bei hohen Behandlungstemperaturen, beispielsweise im Bereich von 500 bis 750°C, das Aufheizvermögen der erfindungsgemäßen Eisen-Silicium-Oxidpartikel nicht negativ beeinflusst wird.

In dem erfindungsgemäßen Verfahren können im Prinzip alle dampfförmigen Eisenverbindungen eingesetzt werden, solange sie hydrolysierbar und/oder oxidierbar sind. In der Praxis kommen bevorzugt solche Eisenverbindungen zum Einsatz, bei denen die Bereitstellung eines Dampfes, der die Eisenverbindung enthält oder aus ihr besteht, mit technisch gängigen Aggregaten zu bewerkstelligen ist. Besonders bevorzugt kann hierbei Eisen (III) chlorid eingesetzt werden. Die Eisenverbindung kann mittels eines Traggases, beispielsweise Stickstoff oder Luft, eingebracht werden.

Wie die Eisenverbindungen liegen beim erfindungsgemäßen Verfahren auch die Siliciumverbindungen dampfförmig vor und sind wie die Eisenverbindungen oxidierbar und/oder hydrolysierbar. Geeignete Verbindungen können auf Grund der guten Verfügbarkeit halogenidhaltige Siliciumverbindungen, insbesondere Chlorsiliciumverbindungen, sein. Bevorzugt werden die Siliciumverbindungen aus einer oder mehreren Verbindungen, aus der Gruppe bestehend aus $ClSiH_3$, $Cl_2SiH_2$, $Cl_3SiH$, $Cl_4Si$, $Cl_3SiCH_3$ und n-$C_3H_7SiCl_3$, ausgewählt.

Besonders geeignet für die Durchführung des erfindungsgemäßen Verfahrens sind Eisen(III)chlorid und $Cl_4Si$ oder Eisen (III) chlorid und $Cl_3SiCH_3$ oder Eisen(III)chlorid und ein Gemisch aus $Cl_4Si$ und $Cl_3SiCH_3$.

Als wasserstoffhaltige Brenngase eignen sich Wasserstoff, Methan, Ethan, Propan und/oder Erdgas, wobei Wasserstoff bevorzugt ist. Als Sauerstoff enthaltendes Gas kommt in der Regel Luft oder mit Sauerstoff angereicherte Luft zum Einsatz.

Sollen die Eisen-Silicium-Oxidpartikel noch oberflächenmodifiziert werden, kann man gemäß der Verfahren vorgehen, wie sie im Stand der Technik bei der Oberflächenmodifizierung von pyrogenen Metalloxiden beschrieben sind.

Zur Herstellung von Eisen-Silicium-Oxidpartikeln mit hohem Aufheizvermögen, werden die Einsatzstoffe bevorzugt so gewählt, dass die adiabatische Flammentemperatur $T_{ad}$ 1500 bis 2800°C ist. Besonders bevorzugt kann ein Bereich von 1800 bis 2600°C sein.

Sollen Eisen-Silcium-Oxidprtikel mit im magnetischen Wechselfeld zu erreichbaren hohen Temperaturen hergestellt werden, kann es vorteilhaft sein, lambda und gamma so zu wählen, dass

$1 < \lambda \leq 2$ und $2,5 \leq y \leq 20$ oder
$1 < \lambda \leq 2$ und $1 < \gamma \leq 2$ ist,

wobei $\gamma$ (gamma) definiert ist als zugeführter Wasserstoff/stöchiometrisch benötigter Wasserstoff und $\lambda$ (lambda) definiert ist als zugeführter Sauerstoff/ stöchiometrisch benötigter Sauerstoff.

Die Eduktbeladung c wird bevorzugt von 0,5 bis 3 mol/Nm$^3$ gewählt. Sollen Eisen-Silcium-Oxidprtikel mit im magnetischen Wechselfeld zu erreichbaren hohen Temperaturen hergestellt werden, kann es vorteilhaft sein c $\geq 2$ mol/Nm$^3$ zu wählen, wobei c jeweils definiert ist als c = Summe (Eisenverbindung + Siliciumverbindung) in mol / Gasvolumen in Nm$^3$.

Ein weiterer Gegenstand der Erfindung ist die Verwendung der Eisen-Silicium-Oxidpartikel in Datenspeichern, als Kontrastmittel in bildgebenden Verfahren, für biochemische Trenn- und Analyseverfahren, für medizinische Anwendungen, zum Polieren von Glas- und Metalloberflächen, als Katalysator oder als Katalysatorträger, als Füllstoff, als Verdickungsmittel, zur Wärmedämmung, als Dispergierhilfsmittel, als Fließhilfsmittel, in Ferrofluiden und in Klebstoffzusammensetzungen.

**Beispiele**

Analytik

Die BET-Oberfläche wird bestimmt nach DIN ISO 9277.

Die Partikelmorphologie wird durch TEM-Aufnahmen (TEM = Transmissions-Elektronen-Mikroskopie) bestimmt.

Die Zusammensetzung einzelner Partikel wird mittels TEM/EDX (Energy Dispersive X-Ray Analysis (EDX)) bestimmt. Die Pulverzusammensetzung wird durch Röntgenfluoreszenzanalyse bestimmt.

Die Röntgendiffraktogramme werden mittels eines Transmissions-Diffraktometers der Fa. Stoe & Cie Darmstadt, Deutschland ermittelt. Das Pulver, wie aus dem erfindungsgemäßen Prozess erhalten, wird hierzu in einen Probenträger gefüllt, die Oberfläche vorsichtig geglättet und gegen eine Schneide in den Strahl justiert.

Die Parameter sind: CuK alpha-Strahlung, Anregung 40 mA, 40 kV.

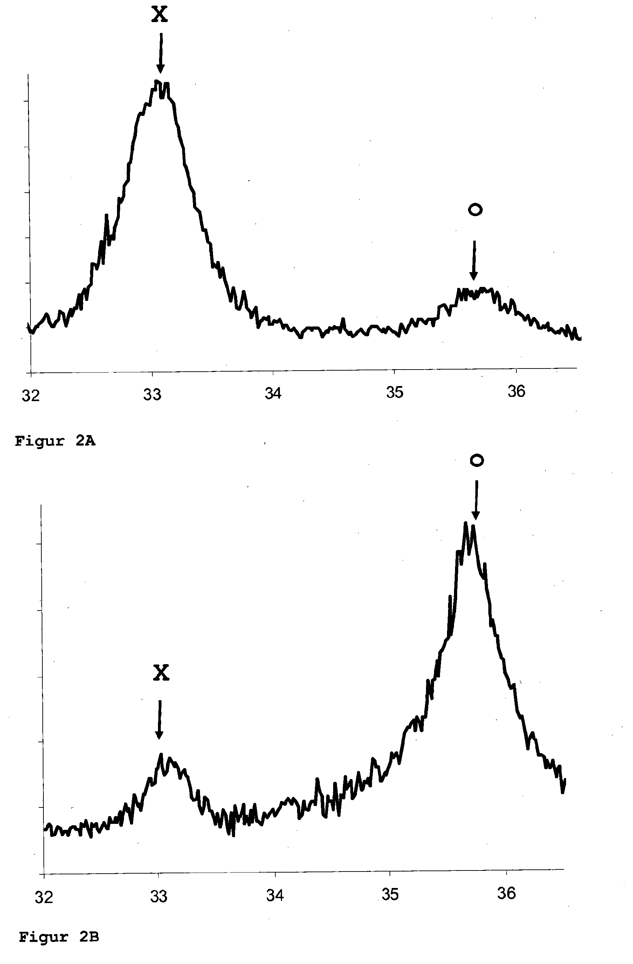

q wird bestimmt, indem man im so erhaltenen Röntgendiffraktogramm die maximale Signalhöhe 2 bei einem Beugungswinkel von 2 0 = 34,5 bis 36,5° und die maximale Signalhöhe 1 bei einem Beugungswinkel von 2 $\Theta$ = 32 bis 34° bestimmt und den Quotienten maximale Signalhöhe 2/maximale Signalhöhe 1 berechnet. In Figur 2A wird dies anhand des Beispieles 1 für q = 0,3, in Figur 2B anhand des Beispieles 8 für q = 2,6 dargestellt. In den Figuren 2A und 2B ist als x-Achse 2 Theta und als y-Achse "counts" aufgetragen. "X" markiert die maximale Signalhöhe 1, "o" die maximale Signalhöhe 2.

Bestimmung der im Magnetfeld maximal erreichbaren Temperaturen: 200 mg Eisen-Silicium-Oxidpartikel werden mit 1,5 to verpresst. Die erhaltenen Tabletten hatten eine glatte Oberfläche und ausreichende Stabilität. Sie werden auf einem Objektträger auf den Induktor platziert und die Temperatur berührungslos vermessen. Die Messungen der maximal erreichbaren Temperatur werden an einem Mittelfrequenz-Gerät bei 40 kHz durchgeführt. Die angegebenen erreichten Maximaltemperaturen sind Mittelwerte der Maximaltemperaturen von Messungen an mindestens zwei von jedem Muster angefertigten Tabletten.

Beispiel 1 (nicht erfindungsgemäß) : Ein Gemisch aus 0,47 kg/h dampfförmigem Eisen(III)chlorid, 0,10 kg/h dampfförmigem Tetrachlorsilan, 0,26 Nm$^3$/h Wasserstoff und 4,26 Nm$^3$/h Luft wird gezündet und die Flamme in einen Reaktionsraum hinein verbrannt. Das feste Reaktionsprodukt wird von den gasförmigen Reaktionsprodukten abgetrennt und nachfolgend bei einer Temperatur von 300°C über einen Zeitraum von ca. 5 s mit Wasserdampf behandelt. Das erhaltene Pulver weist eine BET-Oberfläche von 89 m$^2$/g und einen Gehalt an Eisenoxid, gerechnet als Fe$_2$O$_3$, von 86,8 Gew.-% auf.

Die Auswertung des Röntgendiffraktogramms liefert q zu 0,3. Die TEM-EDX-Analyse zeigt Partikel in sphäroider Form mit jeweils einem Abschnitt aus Eisenoxid und einem Abschnitt aus Siliciumdioxid.

Die im Magnetfeld maximale erreichbare Temperatur beträgt 82,5°C.

Die Beispiele 2-10 werden analog durchgeführt.

Die Versuche zeigen, dass man erfindungsgemäße Eisen-Silicium-Oxidpartikel mit definierter maximaler im magnetischen Wechselfeld erreichbarer Temperatur herstellen kann.

**Tabelle: Versuchseinstellungen und Partikeleigenschaften**

| Beispiel | 1* | 2* | 3 | 4 | 5 | 6 | 7 | 8 | 9 | 10 |
|---|---|---|---|---|---|---|---|---|---|---|
| $FeCl_3$ [kg/h] | 0,47 | 0,43 | 0,74 | 0,19 | 0,33 | 0,50 | 0,48 | 0,77 | 0,44 | 0,53 |
| $SiCl_4$ [kg/h] | 0,10 | 0,10 | 0,15 | 0,52 | 0,52 | 0,50 | 0,19 | 0,15 | 0,22[1] | 0,10 |
| $H_2$ [Nm³/h] | 0,26 | 0,26 | 0,21 | 0,59 | 0,59 | 0,75 | 0,50 | 0,60 | 2,00 | 2,00 |
| Luft [Nm³/h] | 4,26 | 1,77 | 1,97 | 1,48 | 1,48 | 1,90 | 1,25 | 1,50 | 5,40 | 3,70[2] |
| $\gamma$[3] | 2,10 | 2,25 | 1,07 | 3,35 | 2,83 | 3,19 | 3,33 | 3,01 | 14,6 | 14,7 |
| $\lambda$[4] | 6,83 | 2,83 | 4,01 | 1,05 | 1,05 | 1,06 | 1,05 | 1,05 | 1,07 | 1,07 |
| $C_{Ed}$[5] [mol/Nm³] | 0,70 | 1,30 | 2,02 | 1,64 | 1,97 | 1,89 | 1,83 | 2,15 | n.b. | 0,59 |
| $T_{ad}$ [°C] | 538 | 890 | 649 | 1912 | 1854 | 1885 | 1747 | 1727 | n.b. | 2549 |
| q[6] | 0,3 | 0,8 | 1 | 1,3 | 1,6 | 2,2 | 2,4 | 2,6 | 4,1 | 6,0 |
| BET [m²/g] | 89 | 68 | 65 | 75 | 61 | 52 | 52 | 45 | 37 | 34 |
| $Fe_2O_3$ [Gew.%] | 86,8 | 85,2 | 87,3 | 33,4 | 47,0 | 58,2 | 78,0 | 87,7 | 71,0 | 88,1 |
| $T_{max}$[7] [°C] | 82,5 | 168,5 | n.b. | 116 | 132 | 164 | 193 | 230,7 | 289 | 308 |

*) nicht erfindugsgemäß
1) Methyltrichlorsilan anstelle von $SiCl_4$;
2) plus zusätzlich 0,30 Nm³/h Sauerstoff;
3) $\gamma$ = zugeführter Wasserstoff/ stöchiometrisch benötigter Wasserstoff;
4) $\lambda$ = zugeführter Sauerstoff/ stöchiometrisch benötigter Sauerstoff ;
5) Beladung $FeCl_3$ + $SiCl_4$ bzw. Methyltrichlorsilan/Gasvolumen;
6) q = maximale Signalhöhe 2 / maximale Signalhöhe 1;
7) im Magnetfeld maximal erreichbare Temperatur

## Patentansprüche

1. Eisen-Silicium-Oxidpartikel **dadurch gekennzeichnet, dass**

   a) sie solche in sphärischer und/oder sphäroider Form umfassen, die zwei Abschnitte aufweisen, wobei ein Abschnitt im Wesentlichen aus amorphem Siliciumdioxid und der andere Abschnitt im Wesentlichen aus Eisenoxid besteht,
   b) sie im Röntgendiffraktogramm, welches mittels eines Diffraktometers mit CuK alpha-Strahlung, einer Spannung U von 40 kV und einer Stromstärke I von 40 mA erzeugt wird.

   b1) einen Beugungsreflex 1, dessen maximale Signalhöhe 1 bei einem Beugungswinkel 2 $\Theta$ = 32 bis 34° und
   b2) einen Beugungsreflex 2, dessen maximale Signalhöhe 2 bei einem Beugungswinkel 2 $\Theta$ = 34,5 bis 36,5° ist, zeigen, wobei
   b3), q $\geq$ 1, wobei q definiert als maximale Signalhöhe 2/maximale Signalhöhe 1.

2. Eisen-Silicium-Oxidpartikel nach Anspruch 1, **dadurch gekennzeichnet,**
   **dass** der Anteil an Siliciumdioxid oder Eisenoxid, berechnet als $Fe_2O_3$, 10 bis 90 Gew.-% beträgt.

3. Eisen-Silicium-Oxidpartikel nach den Ansprüchen 1 oder 2, **dadurch gekennzeichnet,**
   **dass** ihre Oberfläche mittels organischer und/oder anorganischer Verbindungen modifiziert ist.

4. Eisen-Silicium-Oxidpartikel nach den Ansprüchen 1 bis 3, **dadurch gekennzeichnet,**
   **dass** die Summe der Anteile von Siliciumdioxid und Eisenoxid, berechnet als $Fe_2O_3$, 99 Gew.-% oder mehr beträgt.

5. Eisen-Silicium-Oxidpartikel nach den Ansprüchen 1 bis 4, **dadurch gekennzeichnet,**
   **dass** die BET-Oberfläche 10 bis 200 m²/g beträgt.

6. Verfahren zur Herstellung der Eisen-Silicium-Oxidpartikel nach den Ansprüchen 1 bis 5, **dadurch gekennzeichnet, dass** man

   a) einen Strom eines Gemisches umfassend jeweils eine oder mehrere

   a1) oxidierbare und/oder hydrolysierbare, dampfförmige Siliciumverbindungen und oxidierbare und/oder hydrolysierbare, dampfförmige Eisenverbindungen, entsprechend dem für die herzustellenden Eisen-Silicium-Oxidpartikel gewünschten Verhältnis, bezogen auf $Fe_2O_3$ und $SiO_2$,
   a2) wasserstoffhaltige Brenngase und
   a3) Sauerstoff enthaltende Gase in einer Flamme zur Reaktion bringt, wobei gilt, dass
   a4) die Gesamtmenge an Sauerstoff mindestens zur vollständigen Umsetzung des wasserstoffhaltigen Brenngases, der Siliciumverbindung und der Eisenverbindung ausreicht,
   a5) die Menge der Einsatzstoffe bestehend aus Siliciumverbindung, Eisenverbindung, Brenngas und Sauerstoff so gewählt ist, dass eine adiabate Flammentemperatur $T_{ad}$ von 500 bis 3000°C resultiert, wobei

$$T_{ad} = [\text{Temperatur Einsatzstoffe + Summe der Reaktionsenthalpien der Teilreaktionen/ Wärmekapazität der Stoffe nach der Umsetzung}],$$

   wobei die spezifische Wärmekapazität der Stoffe bei 1000°C zugrunde gelegt wird,

   b) aus dem Reaktionsgemisch den Feststoff von gasförmigen Stoffen abtrennt und
   c) ihn gegebenenfalls mit einem anorganischen und/oder organischen Oberflächenmodifizierungsmittel behandelt.

7. Verfahren nach Anspruch 6, **dadurch gekennzeichnet, dass** man den Feststoff mit Wasserdampf behandelt.

8. Verfahren nach den Ansprüchen 6 oder 7, **dadurch gekennzeichnet, dass** die Eisenverbindung Eisen(III)chlorid ist.

9. Verfahren nach den Ansprüchen 6 bis 8, **dadurch gekennzeichnet, dass** die Siliciumverbindung eine halogenhaltige Siliciumverbindung ist.

10. Verfahren nach den Ansprüchen 6 bis 9, **dadurch gekennzeichnet, dass** die adiabate Temperatur $T_{ad}$ = 1500 bis 2800°C ist.

11. Verfahren nach den Ansprüchen 6 bis 10, **dadurch gekennzeichnet, dass** $1 < \lambda \leq 2$ und $2,5 \leq \gamma \leq 20$ oder $1 < \lambda \leq 2$ und $1 < \gamma \leq 2$ ist, wobei $\gamma$ (gamma) definiert ist als zugeführter Wasserstoff/stöchiometrisch benötigter Wasserstoff und $\lambda$ (lambda) definiert ist als zugeführter Sauerstoff/ stöchiometrisch benötigter Sauerstoff.

12. Verfahren nach den Ansprüchen 6 bis 11, **dadurch gekennzeichnet, dass** die Eduktbeladung c 0,5 bis 3 mol / $Nm^3$ ist.

13. Verwendung der Eisen-Silicium-Oxidpartikel gemäß den Ansprüchen 1 bis 5 in Datenspeichern, als Kontrastmittel in bildgebenden Verfahren, für biochemische Trenn- und Analyseverfahren, für medizinische Anwendungen, zum Polieren von Glas- und Metalloberflächen, als Katalysator oder als Katalysatorträger, als Füllstoff, als Verdickungsmittel, zur Wärmedämmung, als Dispergierhilfsmittel, als Fließhilfsmittel, in Ferrofluiden und in Klebstoffzusammensetzungen.

**Claims**

1. Iron-silicon oxide particles,
   **characterized in that**

   a) the particles comprise those of spherical and/or spheroidal shape, having two portions, one portion consisting essentially of amorphous silicon dioxide and the other portion consisting essentially of iron oxide,
b) the particles have a voltage U of 40 kV and an amperage I of 40 mA in the X-ray diffractogram, which is created by means of a diffractometer using CuK alpha radiation,

b1) and have a diffraction reflex 1, having a maximum signal height 1 at a diffraction angle $2\Theta = 32$ to $34°$
b2) and have a diffraction reflex 2 having a maximum signal height 2 at a diffraction angle $2\Theta = 34.5$ to $36.5°$, wherein
b3) $q \geq 1$, where q is defined as the maximum signal height 2/maximum signal height 1.

2. The iron-silicon oxide particles according to Claim 1,
**characterized in that**
the amount of silicon dioxide or iron oxide, calculated as $Fe_2O_3$, is 10 to 90 percent by weight.

3. The iron-silicon oxide particles according to Claims 1 or 2,
**characterized in that**
the surface of the particles is modified by means of organic and/or inorganic compounds.

4. The iron-silicon oxide particles according to Claims 1 to 3,
**characterized in that**
the sum of the amounts of silicon dioxide and iron oxide, calculated as $Fe_2O_3$, is 99 percent by weight or more.

5. The iron-silicon oxide particles according to Claims 1 to 4,
**characterized in that**
the BET surface area is 10 to 200 $m^2/g$.

6. A method for producing the iron-silicon oxide particles according to Claims 1 to 5, **characterized in that**

a) a stream of a mixture comprising one or more

a1) oxidizable and/or hydrolyzable vaporous silicon compounds and oxidizable and/or hydrolyzable vaporous iron compounds, corresponding to the ratio desired for the iron-silicon oxide particles to be produced, based on $Fe_2O_3$ and $SiO_2$,
a2) combustible gases containing hydrogen and
a3) gases containing oxygen are brought to reaction in a flame, wherein it applies that
a4) the total amount of oxygen is sufficient for at least a complete conversion of the combustion gas that contains hydrogen, the silicon compound and the iron compound,
a5) the amount of the feed materials comprising silicon compound, iron compound, combustible gas and oxygen is selected so that an adiabatic flame temperature $T_{ad}$ of 500 to 3000°C results, wherein

$$T_{ad} = [\text{temperature of feed materials} + \text{sum of the reaction enthalpies of the partial reactions/thermal capacity of the substances after reaction}],$$

wherein the specific thermal capacity of the substances at 1000°C is used as the basis,

b) the solid is separated from the gaseous substances in the reaction mixture and
c) the solid is optionally treated with an organic and/or inorganic surface modifier.

7. The method according to Claim 6,
**characterized in that**
the solid is treated with steam.

8. The method according to Claims 6 or 7,
**characterized in that**
the iron compound is iron(III) chloride.

9. The method according to Claims 6 to 8,
   **characterized in that**
   the silicon compound is a silicon compound that contains halogen.

10. The method according to Claims 6 to 9,
    **characterized in that**
    the adiabatic temperature $T_{ad}$ is 1500 to 2800°C.

11. The method according to Claims 6 to 10,
    **characterized in that**
    $1 < \lambda \leq 2$ and $2.5 \leq \gamma \leq 20$ or $1 < \lambda \leq$ and $1 < \gamma \leq 2$,
    wherein $\gamma$ (gamma) is defined as the supplied hydrogen/stoichiometrically required hydrogen, and $\lambda$ (lambda) is defined as the supplied oxygen/stoichiometrically required oxygen.

12. The method according to Claims 6 to 11,
    **characterized in that**
    the reagent load c is 0.5 to 3 mol/Nm$^3$.

13. Use of the iron-silicon oxide particles according to Claims 1 to 5 in data storage devices, as contrast agents in imaging methods, for biochemical separation and analysis methods, for medical applications, for polishing glass and metal surfaces, as a catalyst or as a catalyst support, as a filler, as a thickener, for thermal insulation, as a dispersion aid, as an anti-blocking agent, in ferrofluids and in adhesive compositions.

**Revendications**

1. Particules d'oxydes de fer et de silicium, **caractérisé en ce que** :

   a) elles comportent des particules de forme sphérique et/ou de forme sphéroïde qui ont deux parties, une partie consistant essentiellement en du dioxyde de silicium amorphe et l'autre partie consistant essentiellement en de l'oxyde de fer, et **en ce que**
   b) elles présentent dans le diagramme de diffraction des rayons X généré au moyen d'un diffractomètre à rayonnement alpha CuK, d'une tension U de 40 kV et d'une intensité de courant de 40 mA,

      b1) un pic de diffraction 1 de niveau de signal maximum 1 pour un angle de diffraction de $2\theta = 32$ à 34° et
      b2) un pic de diffraction 2 de niveau de signal maximum 2 pour un angle de diffraction de $2\theta = 34,5$ à 36,5°, où
      b3) q $\geq$ 1, q étant défini comme étant le rapport niveau de signal maximum 2/niveau de signal maximum 1.

2. Particules d'oxydes de fer et de silicium selon la revendication 1, **caractérisées en ce que** le pourcentage de dioxyde de silicium ou d'oxyde de fer, calculé sous la forme $Fe_2O_3$, est de 10 à 90% en poids.

3. Particules d'oxydes de fer et de silicium selon les revendications 1 ou 2, **caractérisées en ce que** leur surface est modifiée au moyen de composés organiques et/ou inorganiques.

4. Particules d'oxydes de fer et de silicium selon les revendications 1 à 3, **caractérisées en ce que** la somme du pourcentage de dioxyde de silicium et du pourcentage d'oxyde de fer, calculé sous la forme $Fe_2O_3$, est de 99% en poids ou plus.

5. Particules d'oxydes de fer et de silicium selon les revendications 1 à 4, **caractérisées en ce que** la surface BET est de 10 à 200 m$^2$/g.

6. Procédé de production de particules d'oxydes de fer et de silicium selon les revendications 1 à 5, **caractérisé en ce que** l'on fait réagir dans une flamme

   a) un flux d'un mélange comprenant à chaque fois un ou plusieurs

      a1) composés du silicium à l'état vapeur, hydrolysables et/ou oxydables, et composés du fer à l'état vapeur, hydrolysables et/ou oxydables, dans le rapport souhaité pour les particules d'oxydes de fer et de silicium à produire, sur la base de $Fe_2O_3$ et de $SiO_2$,

a2) gaz combustibles contenant de l'hydrogène et

a3) gaz contenant de l'oxygène, à la condition que

a4) la quantité totale d'oxygène soit suffisante au moins pour convertir totalement le gaz combustible contenant de l'hydrogène, le composé du silicium et le composé du fer,

a5) la quantité de matières premières consistant en le composé du silicium, le composé du fer, le gaz combustible et l'oxygène soit choisie de telle sorte qu'il en résulte une température de flamme adiabatique $T_{ad}$ de 500 à 3000°C, où

$$T_{ad} = [\text{température des matières premières + somme des enthalpies des réactions partielles/capacité thermique des matières après conversion}],$$

en prenant pour base la capacité thermique spécifique des matières à 1000°C,

b) à partir du mélange réactionnel, on sépare la matière solide des matières gazeuses et

c) on traite éventuellement la matière solide avec un modificateur de surface inorganique et/ou organique.

7. Procédé selon la revendication 6, **caractérisé en ce que** l'on traite la matière solide à la vapeur d'eau.

8. Procédé selon les revendications 6 ou 7, **caractérisé en ce que** le composé du fer est du chlorure ferrique.

9. Procédé selon les revendications 6 à 8, **caractérisé en ce que** le composé du silicium est un composé du silicium halogéné.

10. Procédé selon les revendications 6 à 9, **caractérisé en ce que** la température adiabatique $T_{ad}$ est de 1500 à 2800°C.

11. Procédé selon les revendications 6 à 10, **caractérisé en ce que** $1 < \lambda \le 2$ et $2,5 < \gamma < 20$ ou $1 < \lambda \le 2$ et $1 < \gamma \le 2$, $\gamma$ (gamma) étant défini comme étant le rapport hydrogène fourni/hydrogène nécessaire du point de vue stoechiométrique et $\lambda$ (lambda) étant défini comme étant le rapport oxygène fourni/oxygène nécessaire du point de vue stoechiométrique.

12. Procédé selon les revendications 6 à 11, **caractérisé en ce que** la charge de réactifs c est de 0,5 à 3 mol/Nm$^3$.

13. Utilisation des particules d'oxydes de fer et de silicium selon les revendications 1 à 5 dans des mémoire de données, comme agent de contraste dans des procédés d'imagerie, dans des procédés de séparation et d'analyse biochimiques, dans des applications médicales, dans le polissage de surfaces en verre ou en métal, comme catalyseur ou comme support de catalyseur, comme charge, comme agent épaississant, dans l'isolation thermique, comme adjuvant de dispersion, comme agent d'écoulement, dans des ferrofluides et dans des compositions adhésives.

Figur 1

Figur 2A

Figur 2B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1284485 A
- WO 2008148588 A
- EP 2000439 A

**In der Beschreibung aufgeführte Nicht-Patentliteratur**

- *Adv. Mater.,* 2009, vol. 21, 184-187
- **GAO et al.** *Adv. Mater.,* 2009, vol. 21 (184